# FASCICULE DE BREVET EUROPEEN

(11) **EP 0 859 942 B1**
(45) Date de publication et mention de la délivrance du brevet: **18.07.2001**
(21) Numéro de dépôt: 96938282.9
(22) Date de dépôt: 08.11.1996
(51) Int. Cl.: G01D 21/02, A63B 49/00

(54) **DISPOSITIF DE MESURE D'AU MOINS UN PARAMETRE PHYSIQUE RELATIF A UNE BALLE DE JEU PROPULSEE**
VORRICHTUNG ZUR MESSUNG MINDESTENS EINES PARAMETERS EINES VORWÄRTS GETRIEBENEN SPIELBALLS
DEVICE FOR MEASURING AT LEAST ONE PHYSICAL PARAMETER RELATING TO A PROPELLED GAME BALL

(30) Priorité: 08.11.1995 FR 9513372
(43) Date de publication de la demande: 26.08.1998
(73) Titulaire: Somville, Raymond Joseph, 2900 Porrentruy (CH)
(72) Inventeur: SOMVILLE, Pierre-Noel, F-90100 Delle (FR)
(74) Mandataire: Nithardt, Roland
(86) Numéro de dépôt international: FR9601765
(87) Numéro de publication internationale: WO9717590

(56) Documents cités:
- DE-A- 3 436 218
- US-A- 4 088 324
- US-A- 4 870 868
- US-A- 4 991 850

## Description

La présente invention concerne un dispositif de mesure d'au moins un paramètre physique relatif à une balle de jeu propulsée au moyen d'un organe propulseur, notamment d'une raquette de tennis, ainsi qu'une raquette de tennis équipée d'un tel dispositif de mesure, ce dispositif comportant au moins un capteur de mesure agencé pour délivrer des signaux correspondant audit paramètre physique à mesurer, des moyens de traitement de ces signaux agencés pour analyser les signaux émis par le capteur de mesure et pour déterminer une valeur mesurée dudit paramètre physique et des moyens d'affichage pour afficher cette valeur, le capteur de mesure étant agencé pour détecter les vibrations engendrées par la balle propulsée par l'organe propulseur et comportant un élément piézo-électrique agencé pour délivrer des signaux électriques sinusoïdaux proportionnels à l'intensité des vibrations détectées, le paramètre physique mesuré correspondant à la vitesse de frappe de la balle de jeu.

On entend par "paramètre physique" notamment la vitesse d'une balle appropriée propulsée par un organe propulseur correspondant, ou toute autre grandeur telle que la force de frappe de la balle ou similaire. L'invention peut donc s'appliquer à tous les jeux et sports faisant intervenir une balle et un organe propulseur, tels que le tennis, le golf, le base-ball, le hockey sur glace, le ping-pong et d'autres sans aucune limitation. Le tennis a été retenu comme exemple d'application dans la présente invention.

Il est bien connu, dans le milieu du sport, que les joueurs cherchent constamment à améliorer leurs performances de jeu. C'est la raison pour laquelle on cherche à développer des moyens pour mesurer, calculer, comparer ces performances. Néanmoins, à l'heure actuelle, il n'existe aucun moyen permettant de mesurer en temps réel la vitesse de la balle en cours de jeu avec une précision et une fiabilité suffisantes. Dans les rencontres sportives à haut niveau, il est connu d'utiliser des radars placés sur le bord du terrain. Ces derniers nécessitent un investissement lourd et donnent des résultats dont la marge d'erreur d'environ 20 % les rend inexploitable. Il est également connu d'utiliser des chronomètres qui permettent, par une intégration de la distance et du temps, de déterminer la vitesse de la balle. Mais ce système est trop complexe à gérer.

Il existe néanmoins certains dispositifs de mesure prévus dans un organe propulseur tel qu'une raquette ou qu'un club de golf et agencés pour mesurer la force de frappe d'une balle ou le point d'impact de la balle sur l'organe propulseur. Ces dispositifs sont décrits notamment dans les publications suivantes DE-A-34 36 218, US-A-4 991 850, US-A-4 870 868 et US-A-4 008 324. Mais aucun n'est agencé pour délivrer instantanément une valeur de mesure correspondant à la vitesse de frappe d'une balle.

L'état de la technique, tel que défini dans le préambule de la revendication principale, ressort toutefois de la publication US-A-4 940 236 qui décrit un dispositif de mesure de la vitesse de frappe d'une balle de golf propulsée par une crosse.

Le but de la présente invention est de pallier les inconvénients mentionnés ci-dessus en proposant un dispositif de mesure très peu. coûteux, d'un encombrement total extrêmement réduit pouvant être placé intégralement sur l'organe propulseur, capable de fournir instantanément une valeur dudit paramètre physique par une mesure en temps réel en garantissant une précision de l'ordre de 5 % et pouvant être calibré rapidement en fonction du type de l'organe propulseur et du type de la balle de jeu sans avoir besoin d'un matériel de calibrage additionnel et sophistiqué.

Ce but est atteint par un dispositif de mesure tel que défini en préambule et caractérisé en ce que les moyens de traitement des signaux comportent au moins un analyseur électronique couplé audit capteur de mesure et agencé pour transformer les signaux électriques émis par le capteur en une valeur mesurée de la vitesse de frappe réelle de la balle, et, au moins un microcontrôleur couplé à l'analyseur électronique et auxdits moyens d'affichage, en ce que le microcontrôleur comporte une unité de calibrage agencée pour initialiser automatiquement l'analyseur électronique en fonction au moins du type de l'organe propulseur, à savoir la nature et la tension du cordage, et du type de la balle de jeu de manière à corriger automatiquement et instantanément ladite valeur mesurée, et en ce que l'analyseur et le microcontrôleur sont agencés pour fonctionner de manière interactive.

Dans un mode de réalisation préférée, l'analyseur électronique comporte des moyens pour appliquer un algorithme de calcul agencé pour interpréter les signaux électriques émis par le capteur et pour déterminer ladite valeur mesurée de la vitesse réelle de la balle.

De préférence, le microcontrôleur comporte au moins deux modes de fonctionnement sélectionnés par bouton poussoir, notamment un mode de calibrage et un mode de fonctionnement normal.

Ce microcontrôleur est également agencé pour détecter et identifier un éventuel défaut de jeu, de même qu'un éventuel défaut de l'organe propulseur.

Ce microcontrôleur comporte avantageusement une unité de mémorisation agencée pour garder en mémoire les dernières valeurs mesurées.

Selon le mode de réalisation préféré, les moyens d'affichage comportent un écran numérique agencé pour afficher une valeur mesurée momentanée de la vitesse de la balle ou successivement les dernières valeurs mémorisées ainsi que le mode de fonctionnement des moyens de traitement par des sigles correspondants et les éventuels défauts de jeu et/ou de l'organe propulseur par des points lumineux correspondants.

Le dispositif de mesure peut comporter un émetteur intégré agencé pour transmettre les valeurs mesurées et autres informations sur tout support de traitement et/ou de visualisation équipé d'un récepteur approprié.

Le but de l'invention est également atteint par une raquette de tennis caractérisée en ce qu'elle comporte au moins un dispositif de mesure tel que défini précédemment, dans lequel le capteur est couplé d'une part au cordage de la raquette et d'autre part aux moyens de traitement des signaux et d'affichage.

Dans une première forme de réalisation, le capteur est enrobé dans une pièce de maintien en matière synthétique souple, montée entre au moins deux cordes de la raquette et les moyens de traitement des signaux et d'affichage sont assemblés dans un boîtier monté sur ladite raquette de telle manière que les moyens d'affichage soient visibles par le joueur.

Selon une seconde forme de réalisation, le capteur de mesure et les moyens de traitement et d'affichage sont incorporés dans un boîtier en matière synthétique monté sur le cordage de la raquette.

La présente invention et ses avantages apparaîtront mieux dans la description suivante d'un exemple de réalisation, en référence aux dessins annexés, dans lesquels :
- la figure 1 est une vue partielle d'une raquette de tennis équipée d'un dispositif de mesure selon l'invention, et
- la figure 2 est un schéma électrique dudit dispositif de mesure.

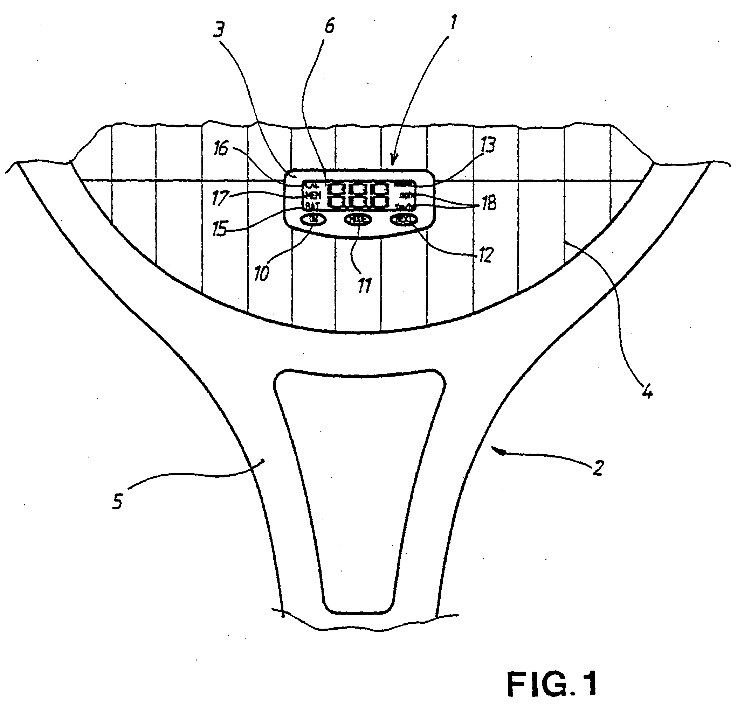

En référence à la figure 1, le dispositif de mesure 1 selon l'invention est par exemple agencé pour mesurer la vitesse d'une balle de tennis propulsée par une raquette de tennis 2 lors d'un coup droit, d'un revers ou d'un service. Il est prévu pour être incorporé dans un boîtier 3 réalisé dans une matière synthétique telle qu'une résine, pour être monté sur le cordage 4 de la raquette de tennis 2 à proximité de son manche 5. Les parties visibles du dispositif de mesure 1 sont constituées notamment par un écran numérique 6 sur lequel le joueur peut lire directement la valeur mesurée de la vitesse de frappe ainsi que d'autres informations qui seront détaillées ci-après. On constate aisément, en référence à cette figure, que le dispositif de mesure 1 est miniaturisé et peut tenir dans un boîtier 3 de très petites dimensions, par exemple 18 mm sur 40 mm.

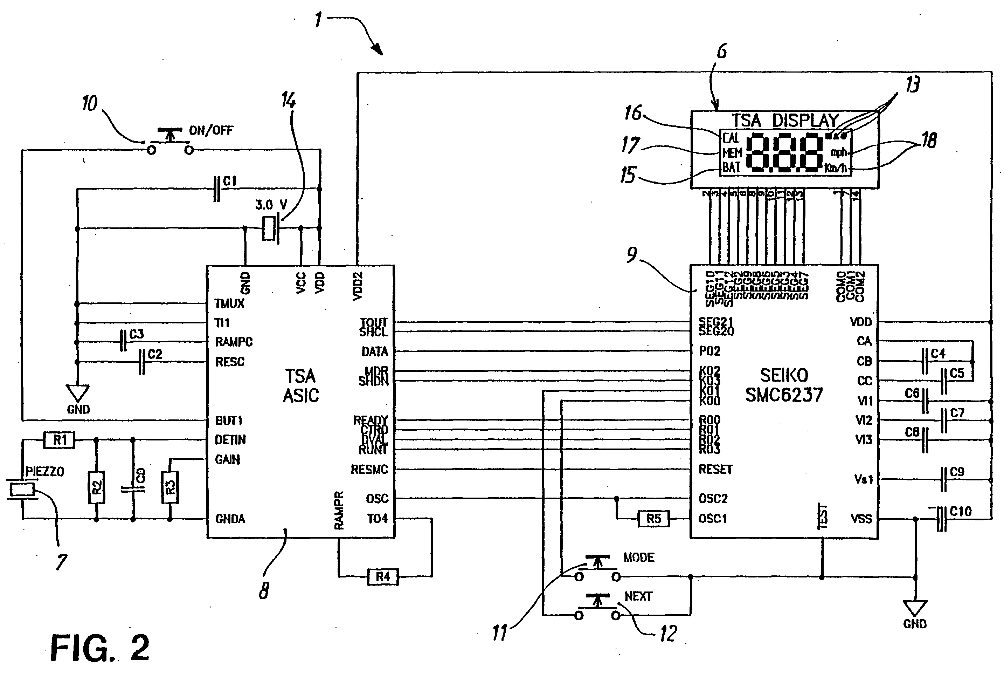

La figure 2 illustre en détail le schéma électrique de ce dispositif de mesure 1. Il comporte essentiellement un capteur de mesure 7 du type piézo-électrique, un analyseur électronique intégré 8 du type microprocesseur (ASIC : circuit intégré selon la norme de l'Institut de Normalisation Américain), un microcontrôleur intégré 9 du type microprocesseur (SEIKO® ) et un écran numérique à cristaux liquides 6. Ce dispositif de mesure 1 est actionné par un premier bouton poussoir 10 appelé "DN" marche/arrêt accessible sur la face avant du boîtier 3.

Le capteur de mesure 7 délivre un signal électrique de forme sinusoïdale dont la tension, l'amplitude et la fréquence des pics correspondent à l'intensité des vibrations des cordes de la raquette 2 engendrées au moment de la frappe de la balle. Ce signal est transmis à l'analyseur 8 qui, au moyen d'un algorithme de calcul, l'intègre pour obtenir une dynamique de signal tenant compte de sa tension, de sa fréquence et de son amplitude, puis le transforme en une valeur de mesure correspondant à la vitesse de la balle.

En parallèle, le microcontrôleur 9 comporte une unité de calibrage intégrée qui permet d'initialiser l'analyseur 8 en fonction notamment du type de raquette, à savoir la nature et la tension du cordage, de la nature de la balle de jeu et même de l'environnement. Grâce à cette unité de calibrage, le dispositif de mesure 1 peut être utilisé de manière fiable pour toutes les raquettes de tennis et toutes les sortes de balles quelles que soient leurs caractéristiques techniques. Le calibrage est donc une opération à effectuer nécessairement avant la première utilisation de ce dispositif L'unité de calibrage est activée par un deuxième bouton poussoir 11 appelé "MODE" accessible sur la face avant du boîtier 3. Elle permet d'enregistrer l'intensité des vibrations créées par une balle de tennis qu'on laisse tomber de la hauteur du filet de tennis sur le cordage 4 de la raquette 2 posée sur le sol et dont la vitesse est connue. Les données recueillies par cette unité de calibrage, à savoir la tension, la fréquence et l'amplitude du signal électrique, permettent alors de comparer et d'interpréter les signaux électriques émis par le capteur de mesure 7, en mode de fonctionnement normal de jeu, en fonction de la nature et de la tension du cordage de la raquette de tennis utilisée, de même qu'en fonction de la nature de la balle et de l'environnement. Ainsi, la valeur mesurée de la vitesse de frappe est calculée avec une précision aussi fine que possible. L'analyseur 8 et le microcontrôleur 9 sont donc conçus pour travailler de manière interactive et permettent d'obtenir ainsi des valeurs mesurées très fiables et très précises.

La valeur mesurée de la vitesse est alors affichée sur l'écran numérique 6 en kilomètres par heure ou en miles par heure. La sélection de l'unité de mesure est obtenue par un troisième bouton poussoir 12 appelé "NEXT" accessible sur la face avant du boîtier 3.

Le microcontrôleur 9 comporte une unité de détection intégrée agencée pour détecter les mauvaises frappes de balle, hors centre ou sur le cadre, et même la dépréciation de la tension du cordage 4 de la raquette de tennis 2 en reconnaissant la fréquence changeante du signal émis par le capteur de mesure piézo-électrique 7. Ces défauts de jeux sont visualisés par le joueur sur l'écran au moyen de points lumineux 13 ayant des formes différentes pour identifier rapidement le défaut en cause. Ces points ont par exemple une forme de carré, de triangle et de rond, chacun correspondant à la signalisation d'un défaut précis. Cette unité de détection est également agencée pour reconnaître les frappes d'attente des frappes de jeu, pour éviter de les traiter et de les mémoriser. Les frappes d'attente se reconnaissent par le fait qu'elles sont dirigées perpendiculairement au cordage 4 de la raquette 2 et sont de faible intensité.

Le microcontrôleur 9 comporte également une unité de mémorisation agencée pour garder en mémoire les dernières valeurs mesurées de la vitesse de frappe de la balle, par exemple les dix dernières valeurs. Le joueur peut visualiser successivement ces valeurs mémorisées sur l'écran numérique 6 par le bouton poussoir 11 appelé "MODE".

Le dispositif de mesure 1 est alimenté par une batterie 14 dont l'autonomie est relativement importante, par exemple cinq ans. Un témoin de batterie 15 est prévu sur l'écran numérique 6 sous la forme du sigle "BA" qui s'allume quand la tension de la batterie diminue.

L'écran numérique 6 à cristaux liquides est également pourvu d'autres sigles d'information pour le joueur. Le sigle "CAL" 16 indique que le dispositif de mesure 1 est en mode calibrage. Le sigle "MEM" 17 indique que le dispositif de mesure est en mode mémorisation. Les sigles "mph" et "Km/h" 18 précisent l'unité dans laquelle la valeur de la vitesse est exprimée.

La figure 2 illustre clairement comment les différents composants du dispositif de mesure 1 sont liés entre eux, soit directement, soit par l'intermédiaire de composants additionnels tels que des condensateurs et des résistances agencés de manière connue pour un homme de métier.

On a vu précédemment que le dispositif de mesure 1 peut être intégré dans un boîtier 3 monté sur le cordage 4 d'une raquette 2. Ce dispositif 1 peut être avantageusement complété d'un émetteur (non représenté) agencé pour transmettre les valeurs mesurées à tout autre dispositif de traitement et/ou de visualisation équipé d'un récepteur, tel qu'une télévision pour transmettre l'information lors d'un match, d'un ordinateur pour traiter les informations à distance, d'un écran géant prévu sur le court de tennis pour l'information du public, d'une montre pour faciliter la lecture des informations par le joueur lui-même ou par des tiers. Cette liste de possibilités n'est aucunement restrictive, toutes les variantes pouvant être envisagées.

Le dispositif de mesure 1 tel que décrit précédemment est prévu pour équiper aussi bien les raquettes en sortie d'usine qu'en après-vente. Le dispositif de mesure 1 peut donc se présenter sous différentes variantes de manière à répondre aux différents besoins. Comme illustré par la figure 1, le dispositif de mesure 1 peut se présenter dans un boîtier 3 qui se monte directement sur le cordage 4 de la raquette 2. Une autre variante serait de prévoir que seul le capteur de mesure 7 est prévu pour être monté sur le cordage au moyen d'un support souple, telle qu'une pièce en caoutchouc généralement utilisée comme anti-vibrateur, et que les moyens de traitement 8, 9 et d'affichage 6 sont assemblés dans un boîtier indépendant prévu pour être monté directement ou fixé par l'utilisateur dans le manche 5, sur le manche ou sur la tranche de la raquette 2 selon que le dispositif de mesure est proposé sur une raquette neuve ou en après-vente. Dans cette variante, le capteur de mesure 7 et le boîtier sont reliés par une liaison électrique pouvant être fixée aisément sur le cadre de la raquette 2.

La présente invention n'est pas limitée à l'exemple de réalisation décrit mais s'étend à toute modification et variante évidente pour un homme du métier. Notamment, l'utilisation de ce dispositif de mesure peut s'étendre sans limitation à d'antres sports et jeux pour mesurer la vitesse de tout objet propulsé, moyennant quelques adaptations du boîtier ou du support de ce dispositif.

## Revendications

1. Dispositif de mesure d'au moins un paramètre physique relatif à une balle de jeu propulsée au moyen d'un organe propulseur, notamment d'une raquette de tennis, ce dispositif comportant au moins un capteur de mesure (7) agencé pour délivrer des signaux correspondant audit paramètre physique à mesurer, des moyens de traitement (8, 9) de ces signaux agencés pour analyser les signaux émis par le capteur de mesure (7) et pour déterminer une valeur mesurée dudit paramètre physique et des moyens d'affichage (6) pour afficher cette valeur, le capteur de mesure (7) étant agencé pour détecter les vibrations engendrées par la balle propulsée par l'organe propulseur (2) et comportant un élément piézo-électrique agencé pour délivrer des signaux électriques sinusoïdaux proportionnels à l'intensité des vibrations détectées, le paramètre physique mesuré correspondant à la vitesse de frappe de la balle de jeu, caractérisé
• en ce que les moyens de traitement des signaux comportent au moins un analyseur électronique (8) couplé audit capteur de mesure (7) et agencé pour transformer les signaux électriques émis par le capteur en une valeur mesurée de la vitesse de frappe réelle de la balle, et, au moins un microcontrôleur (9) couplé à l'analyseur électronique (8) et auxdits moyens d'affichage (6),
• en ce que le microcontrôleur (9) comporte une unité de calibrage agencée pour initialiser l'analyseur électronique en fonction au moins du type de l'organe propulseur (2) à savoir la nature et la tension du cordage et du type de la balle de jeu de manière à corriger automatiquement et instantanément ladite valeur mesurée,
• et en ce que l'analyseur (8) et le microcontrôleur (9) sont agencés pour fonctionner de manière interactive.

2. Dispositif selon la revendication 1, caractérisé en ce que l'analyseur électronique (8) comporte des moyens pour appliquer un algorithme de calcul agencé pour interpréter les signaux électriques émis par le capteur de mesure (7) et pour déterminer ladite valeur mesurée de la vitesse réelle de la balle.

3. Dispositif selon la revendication 1, caractérisé en ce que le microcontrôleur (9) comporte au moins deux modes de fonctionnement sélectionnés par boutons poussoirs (11, 12), notamment un mode de calibrage et un mode de fonctionnement normal.

4. Dispositif selon la revendication 1, caractérisé en ce que le microcontrôleur (9) comporte une unité de détection agencée pour reconnaître et identifier un éventuel défaut de jeu et/ou un éventuel défaut de l'organe propulseur (2).

5. Dispositif selon la revendication 1, caractérisé en ce que le microcontrôleur (9) comporte une unité de mémorisation agencée pour garder en mémoire les dernières valeurs mesurées.

6. Dispositif selon l'une quelconque des revendications précédentes, caractérisé en ce que les moyens d'affichage comportent un écran numérique (6) à cristaux liquides agencé pour afficher la valeur mesurée momentanée de la vitesse de la balle ou successivement les dernières valeurs mémorisées ainsi que le mode de fonctionnement des moyens de traitement par des sigles correspondants (16, 17) et les éventuels défauts de jeu et/ou de l'organe propulseur par des points lumineux correspondants (13).

7. Dispositif selon l'une quelconque des revendications précédentes, caractérisé en ce qu'il comporte un émetteur intégré agencé pour transmettre les valeurs mesurées et autres informations sur tout support de traitement et/ou de visualisation équipé d'un récepteur approprié.

8. Raquette de tennis (2) caractérisée en ce qu'elle comporte au moins un dispositif de mesure (1) selon l'une quelconque des revendications précédentes, ledit capteur (7) étant couplé d'une part au cordage (4) de la raquette (2) et d'autre part aux moyens de traitement (8, 9) et d'affichage (6).

9. Raquette de tennis selon la revendication 8, caractérisée en ce que le capteur (7) est enrobé dans une pièce de maintien en matière synthétique souple, montée entre au moins deux cordes de la raquette et les moyens de traitement (8, 9) et d'affichage (6) sont assemblés dans un boîtier monté sur ladite raquette de telle manière que les moyens d'affichage soient visibles par le joueur.

10. Raquette selon la revendication 8, caractérisée en ce que le capteur de mesure (7) et les moyens de traitement (8, 9) et d'affichage (6) sont incorporés dans un boitier (3) en matière synthétique monté sur le cordage (4) de la raquette (2).

## Patentansprüche

1. Vorrichtung zur Messung mindestens eines physischen Parameters eines durch ein Triebsorgan, insbesondere einen Tennisschläger, vorwärts getriebenen Spielballs, wobei diese Vorrichtung mindestens einen Messwertgeber (7) beträgt, der ausgelegt ist, um dem besagten zu messenden physischen Parameter entsprechende Signale auszugeben, sowie Verarbeitungsmittel (8, 9) für diese Signale, die ausgelegt sind, um die durch den Messwertgeber (7) ausgegebenen Signale zu analysieren und einen Messwert des besagten physischen Parameters festzulegen, und Anzeigemittel (6) für die Anzeige dieses Wertes, wobei der Messwertgeber (7) ausgelegt ist, um die durch den Ball, der durch das Triebsorgan (2) getrieben wird, erzeugten Vibrationen aufzunehmen und ein piezoelektrisches Element beträgt, welches ausgelegt ist, um sinusförmige, im Verhältnis zur Stärke der aufgenommenen Vibrationen stehende elektrische Signale auszugeben, wobei es sich bei dem gemessenen physischen Parameter um die Schlaggeschwindigkeit des Spielballs handelt, dadurch gekennzeichet,
• dass die Verarbeitungsmittel der Signale mindestens einen elektronischen Analysator (8) betragen, der an den besagten Messwertgeber (7) gekoppelt ist und der ausgelegt ist, um die durch den Messwertgeber ausgegebenen elektrischen Signale in einen Messwert der tatsächlichen Schlaggeschwindigkeit des Balls umzuwandeln, sowie mindestens einen an den elektronischen Analysator (8) und an die besagten Anzeigemittel (6) gekoppelten Mikrocontroller (9),
• dass der Mikrocontroller (9) eine Kalibrier-Einheit beträgt, die angeordnet ist, um den elektronischen Analysator in Abhängigkeit mindestens des Typs des Triebsorganes (2), d. h. der Art und der Spannung der Bespannung und des Typs des Spielballs zu initialisieren, um den besagten Messwert automatisch und augenblicklich zu korrigieren,
• dass der Analysator (8) und der Mikrocontroller (9) ausgelegt sind, um interaktiv zu funktionieren.

2. Vorrichtung gemäss Anforderung 1, dadurch gekennzeichnet, dass der elektronische Analysator (8) Mittel beträgt, um einen Rechenalgorithmus anzuwenden, der ausgelegt ist, um die durch den Messwertgeber (7) ausgegebenen Signale zu verarbeiten und den besagten Messwert der tatsächlichen Ballgeschwindigkeit zu bestimmen.

3. Vorrichtung gemäss Anforderung 1, dadurch gekennzeichnet, dass der Mikrocontroller (9) mindestens zwei mittels Druckknöpfe (11, 12) gewählte Betriebsarten beträgt, insbesondere eine Betriebsart Kalibrierung und eine Betriebsart Normalbetrieb.

4. Vorrichtung gemäss Anforderung 1, dadurch gekennzeichnet, dass der Mikrocontroller (9) eine Erfassungseinheit beträgt, die ausgelegt ist, um einen eventuellen Spielfehler und/oder eine eventuelle Störung des Triebsorgans (2) festzustellen und zu identifizieren.

5. Vorrichtung gemäss Anforderung 1, dadurch gekennzeichnet, dass der Mikrocontroller (9) eine Speichereinheit beträgt, die ausgelegt ist, um die letzten gemessenen Werte zu speichern.

6. Vorrichtung gemäss irgendeiner der vorhergehenden Anforderungen, dadurch gekennzeichnet, dass die Anzeigemittel eine numerische LCD-Anzeige (6) betragen, die ausgelegt ist, um den Augenblicksmesswert der Ballgeschwindigkeit oder aufeinanderfolgend die letzten gespeicherten Werte, sowie die Betriebsart der Verarbeitungsmittel durch entsprechende Symbole (16, 17) und die eventuellen Spielfehler und/oder Störungen des Triebsorgans durch entsprechende Leuchtpunkte (13) anzuzeigen.

7. Vorrichtung gemäss irgendeiner der vorhergehenden Anforderungen, dadurch gekennzeichnet, dass sie einen integrierten Sender beträgt, der ausgelegt ist, um die Messwerte sowie andere Informationen an jedes mit einem geeigneten Empfänger ausgestattete Verarbeitungs- oder Anzeige-Gerät zu senden.

8. Tennisschläger (2), dadurch gekennzeichnet, dass er mindestens eine Messvorrichtung (1) gemäss irgendeiner der vorhergehenden Anforderungen beträgt, wobei der besagte Messwertgeber (7) einerseits mit der Bespannung (4) des Tennisschlägers (2) und andererseits mit den Verarbeitungsmitteln (8, 9) und mit den Anzeigemitteln (6) gekoppelt ist.

9. Tennisschläger gemäss Anforderung 8, dadurch gekennzeichnet, dass der Messwertgeber (7) in einem zwischen mindestens zwei Saiten des Tennisschlägers montierten Befestigungsstück aus flexiblen Kunststoff eingebettet ist und dass die Verarbeitungsmittel (8, 9) und die Anzeigemittel (6) in einem auf dem besagten Tennisschläger angebrachten Gehäuse untergebracht sind, so dass der Spieler die Anzeigemittel sehen kann.

10. Tennisschläger gemäss Anforderung 8, dadurch gekennzeichnet, dass der Messwertgeber (7) sowie die Verarbeitungsmittel (8, 9) und die Anzeigemittel (6) in einem auf der Bespannung (4) des Tennisschläger (2) montierten Kunststoffgehäuse (3) untergebracht sind.

## Claims

1. Device for measuring at least one physical parameter relating to a game ball propelled by means of a striking element, in particular a tennis racket, this device comprising at least one measuring sensor (7) designed to send signals corresponding to said physical parameter to be measured, means of processing (8, 9) these signals designed to analyse the signals sent by the measuring sensor (7) and to work out a measured value of said physical parameter and the display means (6) for displaying this value, the measuring sensor (7) being designed to detect the vibrations caused by the ball propelled by the striking element (2) and comprising a piezoelectric element designed to send sinusoidal electric signals in proportion to the severity of the vibrations detected, the physical parameter measured corresponding to the speed at which the game ball is struck, characterised
• in that the means of processing the signals comprise at least one electronic analyser (8) coupled to said measuring sensor (7) and designed to transform the electric signals sent by the sensor into a measured value of the real speed at which the ball is struck, and, at least one microcontroller (9) coupled to the electronic analyser (8) and to said display means (6),
• in that the microcontroller (9) comprises a calibrating unit designed to initialise the electronic analyser according to the type of striking element (2), i.e. the type and tension of the strings and the type of game ball so as to automatically and instantaneously correct said measured value, and
• in that the analyser (8) and the microcontroller (9) are designed to operate interactively.

2. Device according to claim 1, characterised in that the electronic analyser (8) comprises means of applying a calculation algorithm designed to interpret the electric signals sent by the measuring sensor (7) and to work out said measured value of the real speed of the ball.

3. Device according to claim 1, characterised in that the microcontroller (9) has at least two operating modes selected using push-buttons (11-12), in particular a calibrating mode and a normal operating mode.

4. Device according to claim 1, characterised in that the microcontroller (9) comprises a detection unit designed to distinguish and identify a possible game fault and/or a possible defect in the striking element (2).

5. Device according to claim 1, characterised in that the microcontroller (9) advantageously comprises a storage unit designed to store the last values measured in the memory.

6. Device according to any of the previous claims, characterised in that the display means comprise a digital liquid crystal display screen (6) designed to display the momentary measured value of the speed of the ball or successively the last values stored, as well as the operating mode of the processing means using corresponding symbols (16, 17) and the possible game faults and/or striking element defects using corresponding lightspots (13).

7. Device according to any of the previous claims, characterised in that it comprises an integrated transmitter designed to transmit the measured values and other information to any processing and/or display medium equipped with a suitable receiver.

8. Tennis racket (2) characterised in that it comprises at least one measuring device (1) according to any of the previous claims, said sensor (7) being coupled on the one hand to the racket's (2) strings (4) and on the other hand to the signal processing means (8, 9) and display means (6).

9. Tennis racket according to claim 8, characterised in that the sensor (7) is imbedded in a holding piece made of flexible synthetic material, mounted between at least two of the racket's strings and the processing means (8, 9) and display means (6) are assembled in a housing mounted on said racket so that the display means can be seen by the player.

10. Tennis racket according to claim 8, characterised in that the measuring sensor (7) and the processing means (8, 9) and display means (6) are incorporated into a housing (3) in synthetic material mounted on the racket's (2) strings (4).
